# EUROPEAN PATENT APPLICATION

(11) **EP 3 499 848 A1**
(43) Date of publication of application: **19.06.2019**
(21) Application number: 18199825.3
(22) Date of filing: 11.10.2018
(51) Int. Cl.: H04L 29/08, G06F 16/27, G06F 16/25

(54) **ONBOARD SYSTEM AND CONTROL METHOD OF THE SAME**

(30) Priority: 12.12.2017 JP 2017237573
(71) Applicant: Renesas Electronics Corporation, 135-0061 Tokyo (JP)
(72) Inventor: KURATOMO, Tatsuro, Koutou-ku, Tokyo 135-0061 (JP)
(74) Representative: Betten & Resch

(57) **Abstract**

An onboard system needs to share data in a database. The onboard system includes a plurality of electronic apparatuses each of which includes a database. The database registers, for each field, information about a database as sharing destination to share data for the field. When sharing data for a field registered in a database of the electronic apparatus, the electronic apparatus transmits data for the field to an electronic apparatus including a database as sharing destination that shares data for the field.

## Description

### CROSS-REFERENCE TO RELATED APPLICATIONS

The disclosure of Japanese Patent Application No.2017-237573 filed on December 12, 2017 including the specification, drawings and abstract is incorporated herein by reference in its entirety.

### BACKGROUND

The present invention relates to an onboard system and a control method of the same.
Patent literature 1 discloses an onboard system that stores a database including data input to or output from each sensor mounted on a vehicle.
Patent literature 1: Japanese Unexamined Patent Application Publication No. 2010-231407

### SUMMARY

In an onboard system, a plurality of units operate in cooperation with each other in order to various functions. Each of the units often includes a database that stores data of a sensor controlled by the unit itself.

Recently, an automatic operation is put into practical use in the onboard system. In consideration of this, it is expected that the units are highly likely to mutually use sensor data stored in the database and perform processes in cooperation with each other.

As disclosed in patent literature 1, it is therefore advantageous that the onboard system shares data in the database. However, patent literature 1 discloses sharing data in the database but nothing about a specific technique to data in the database.

These and other objects and novel features may be readily ascertained by referring to the following description of the present specification and appended drawings.

According to an embodiment, an onboard system includes a plurality of electronic apparatuses each of which includes a database. The database registers, for each field, information about a database as sharing destination to share data for the field. When sharing data for a field registered in a database of the electronic apparatus, the electronic apparatus transmits data for the field to an electronic apparatus including a database as sharing destination that shares data for the field.

The above-mentioned embodiment can contribute to solving the above-mentioned issue.

### BRIEF DESCRIPTION OF THE DRAWINGS

FIG. 1 is a diagram illustrating the overall configuration of the onboard system according to an embodiment;
FIG. 2 illustrates the hardware configuration of an onboard-system SoC according to the embodiment;
FIG. 3 illustrates the hardware configuration of an onboard-system SoC according to the embodiment;
FIG. 4 illustrates the hardware configuration of an onboard microcontroller according to the embodiment;
FIG. 5 illustrates the hardware configuration of a software stack for the onboard system according to the embodiment;
FIG. 6 illustrates operation of a periodic process to write sensor data to a database in the onboard system according to the embodiment;
FIG. 7 illustrates operation of an interrupt process to write sensor data to a database in the onboard system according to the embodiment;
FIG. 8 illustrates the structure of a field list included in the database according to the embodiment;
FIG. 9 illustrates the structure of a history management list included in the database according to the embodiment;
FIG. 10 illustrates the structure of a history data list included in the database according to the embodiment;
FIG. 11 is a diagram illustrating groups sharing data in databases in units of databases in the onboard system according to the embodiment;
FIG. 12 is a diagram illustrating group information about groups sharing data in databases in units of databases in the onboard system according to the embodiment;
FIG. 13 is a diagram illustrating a method of time synchronization in the onboard system according to the embodiment; and
FIG. 14 is a diagram illustrating the specific configuration of an actually available onboard system using the onboard system according to the embodiment.

### DETAILED DESCRIPTION

An embodiment will be described below. The following description and drawings are omitted and simplified as needed in order to clarify the explanation. In the drawings, mutually corresponding elements are designated by the same reference symbols and a duplicate explanation is omitted as needed.

Overall configuration of the onboard system

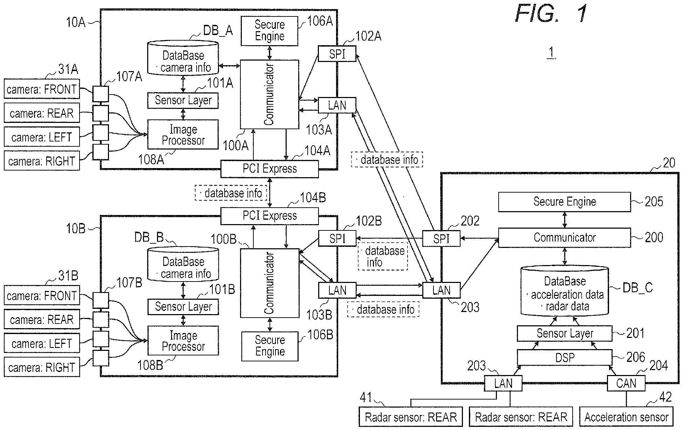

With reference to FIG. 1, the description below explains the overall configuration of an onboard system 1 according to the present embodiment. As illustrated in FIG. 1, the onboard system 1 according to the present embodiment includes onboard-system SoC (System on a Chip) 10A and 10B and an onboard microcontroller 20. The onboard-system SoCs 10A and 10B and the onboard microcontroller 20 represent an electronic apparatus as an example.

The onboard-system SoC 10A controls four sensor cameras 31A that capture the front, rear, left, and right of a vehicle. The onboard-system SoC 10A includes database DB_A that stores camera information (camera info) about camera images captured by the four sensor cameras 31A, for example. The onboard-system SoC 10A includes a communicator 100A that shares, communicates, and encrypts data. The onboard-system SoC 10A may include a database other than database DB_A.

The onboard-system SoC 10B controls four sensor cameras 31B that capture the front, rear, left, and right of a vehicle. The onboard-system SoC 10B includes database DB_B that stores camera information about camera images captured by the four sensor cameras 31B, for example. The onboard-system SoC 10B includes a communicator 100B that shares, communicates, and encrypts data. The onboard-system SoC 10B may include a database other than database DB_B.

The onboard microcontroller 20 controls two radar sensors 41 and an acceleration sensor 42. The radar sensors 41 detect objects existing in front of and behind the vehicle. The acceleration sensor 42 detects an acceleration of the vehicle. The onboard microcontroller 20 includes database DB_C that stores radar data representing detection results from the two radar sensors 41 and acceleration data representing detection results from the acceleration sensor 42. The onboard microcontroller 20 includes a communicator 200 that shares, communicates, and encrypts data. The onboard microcontroller 20 may include a database other than database DB_C.

The onboard-system SoCs 10A and 10B, and the onboard microcontroller 20 are coupled with each other via LAN (Local Area Network), PCI (Peripheral Component Interconnect) Express, SPI (Serial Peripheral Interface), and CAN (Controller Area Network), for example, and communicate database information (database info) representing the contents of databases DB_A, DB_B, and DB_C to each other. Data is therefore shared among two or more databases DB_A, DB_B, and DB_C.

FIG. 1 illustrates partially simplified configurations of the onboard-system SoCs 10A and 10B and the onboard microcontroller 20 in order to explain a flow of data communication among the onboard-system SoCs 10A and 10B and the onboard microcontroller 20. The description below explains detailed hardware configurations of the onboard-system SoCs 10A and 10B and the onboard microcontroller 20.

### Hardware configuration of the onboard-system SoC

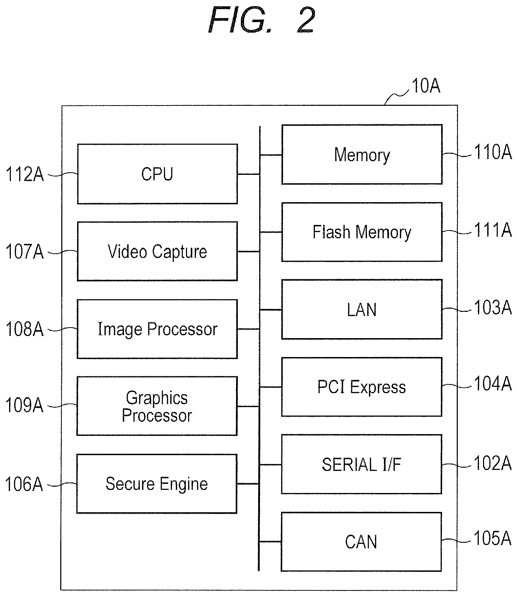

With reference to FIG. 2, the description below explains the hardware configuration of the onboard-system SoC 10A according to the present embodiment.

As illustrated in FIG. 2, the onboard-system SoC 10A according to the present embodiment includes a serial I/F 102A, a LAN I/F 103A, a PCI Express I/F 104A, a CAN I/F 105A, a secure engine 106A, a video capture 107A, an image processor 108A, a graphics processor 109A, a memory 110A, a flash memory 111A, and a CPU (Central Processing Unit) 112A.

The memory 110A stores database DB_A, for example.

The flash memory 111A stores a program to implement functions of the CPU 112A, the video capture 107A, the image processor 108A, the graphics processor 109A, and the communicator 100A. The CPU 112A, the video capture 107A, the image processor 108A, the graphics processor 109A, and the communicator 100A execute the program stored in the flash memory 111A to implement the corresponding functions.

The four video captures 107A are provided corresponding to the four sensor cameras 31A and perform a process to incorporate camera images captured by the corresponding sensor cameras 31A.

The image processor 108A performs a real-time image recognition process on a camera image incorporated by the video capture 107A and writes a result of the image recognition process as camera information to database DB_A via a sensor layer 101A.

The graphics processor 109A performs a display process that allows an unshown display to display process results of the video capture 107A and the image processor 108A and map information, for example.

The communicator 100A communicates data to and from the outside and reads and writes data to database DB_A. The communicator 100A uses the secure engine 106A to perform an encryption process or a decryption process on data in communication with the outside or data read from or written to database DB_A.

The LAN I/F 103A provides a LAN communication interface. The PCI Express I/F 104Aprovides a PCI Express communication interface. The CAN I/F 120 provides a CAN communication interface. The serial I/F 102A provides a serial interface for serial communication such as SPI.

The CPU 112A controls the whole of the onboard-system SoC 10A.

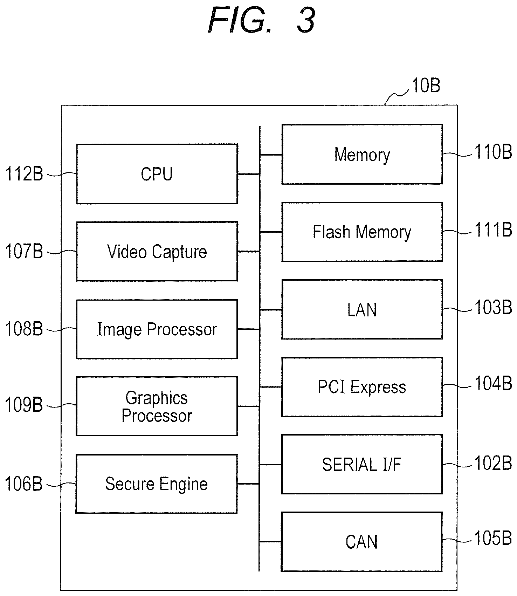

The hardware configuration of the onboard-system SoC 10B is similar to that of the onboard-system SoC 10A. As illustrated in FIG. 3, the onboard-system SoC 10B includes a serial I/F 102B, a LAN I/F 103B, a PCI Express I/F 104B, a CAN I/F 105B, a secure engine 106B, a video capture 107B, an image processor 108B, a graphics processor 109B, a memory 110B, a flash memory 111B, and a CPU 112B.

### Hardware configuration of the onboard microcontroller

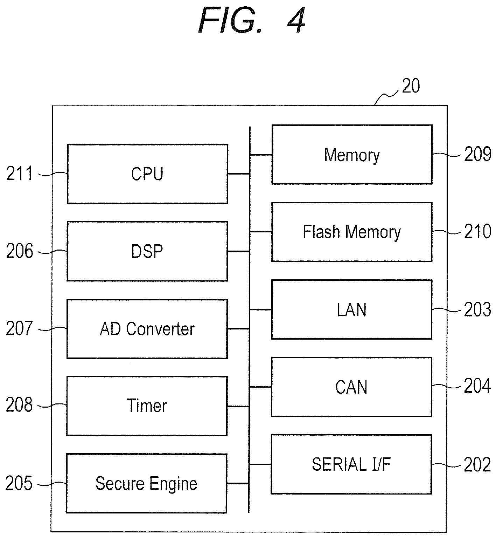

With reference to FIG. 4, the description below explains the hardware configuration of the onboard microcontroller 20 according to the present embodiment. As illustrated in FIG. 4, the onboard microcontroller 20 according to the present embodiment includes a serial I/F 202, a LAN I/F 203, a CAN I/F 204, a secure engine 205, a DSP (digital signal processor) 206, an AD converter 207, a timer 208, a memory 209, a flash memory 210, and a CPU 211.

The memory 209 stores database DB_C, for example.

The flash memory 210 stores a program to implement functions of the CPU 211, the DSP 206, the sensor layer 201, and the communicator 200. The CPU 211, the DSP 206, the sensor layer 201, and the communicator 200 execute the program stored in the flash memory 210 to implement the corresponding functions.

The AD converter 207 converts radar data from the two radar sensors 41 and acceleration data from the acceleration sensor 42 from analog values to digital values.

The DSP 206 processes the radar data and the acceleration data AD-converted by the AD converter 207 and writes the processed data to database DB_C via the sensor layer 201. Based on the radar data, the DSP 206 recognizes an object in front of or behind the vehicle and writes the recognized object to database DB_C via the sensor layer 201.

The CPU 211 controls the whole of the onboard microcontroller 20. The CPU 211 provides vehicle controls such as speed control and steering control. When providing the vehicle control, the CPU 211 uses the timer 208 to generate control signals (such as a PWM (Pulse Width Modulation) signal) for an engine and a motor, for example.

The serial I/F 202, the LAN I/F 203, and the CAN I/F 204 have the same functions as the serial I/F 102A, the LAN I/F 103A, and the CAN I/F 105A illustrated in FIG. 2, and further description is omitted for brevity.

### Software stack in the onboard system

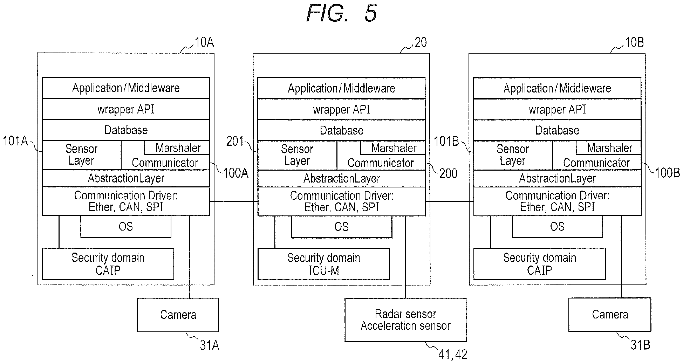

With reference to FIG. 5, the description below explains a software stack in the onboard system 1 according to the present embodiment.

As illustrated in FIG. 5, the same configuration of the software stack is applicable to the onboard-system SoCs 10A and 10B and the onboard microcontroller 20.

In FIG. 5, a communication driver, an OS (operating system), and an application/middleware layer are comparable to the software layer. The safety platform is placed between the communication driver and the application/middleware layer.

### Operation of writing sensor data to the database

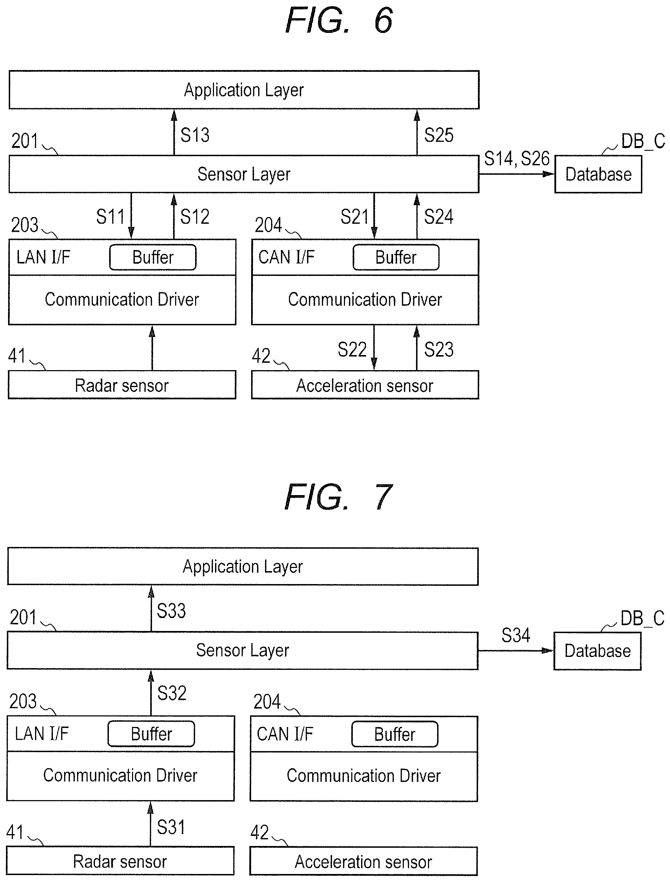

With reference to FIGS. 6 and 7, the description below explains operation of writing sensor data to the database in the onboard system 1 according to the present embodiment. The sensor layers 101A, 101B, and 201 write sensor data to the database. FIGS. 6 and 7 illustrate operations of the sensor layer 201 provided for the DSP 206 to write radar data from the radar sensor 41 and acceleration data from the acceleration sensor 42 to database DB_C in the onboard microcontroller 20.

FIG. 6 illustrates an example where a periodically performed periodic process writes radar data from the radar sensor 41 to database DB_C and writes acceleration data from the acceleration sensor 42 to the database DB_C.

According to the example in FIG. 6, the radar sensor 41 periodically outputs radar data that is then buffered in the LAN I/F 203. However, the acceleration sensor 42 irregularly outputs acceleration data. The acceleration data is therefore not buffered in the CAN I/F 204.

During the periodic process, the sensor layer 201 issues a request to read the radar data to the LAN I/F 203 (S11). At this time, the LAN I/F 203 buffers the radar data. The communication driver provided for the LAN I/F 203 then outputs the radar data buffered in the LAN I/F 203 to the sensor layer 201 (S12) . The sensor layer 201 outputs the radar data to the application layer as a higher-order layer (S13) and writes the radar data to database DB_C to update database DB_C (S14).

During the periodic process, the sensor layer 201 issues a request to read the acceleration data to the CAN I/F 204 (S21). At this time, however, no acceleration data is buffered in the CAN I/F 204. The communication driver provided for the CAN I/F 204 then issues a request to read acceleration data to the acceleration sensor 42 (S22). In response to this, the acceleration sensor 42 outputs acceleration data to the CAN I/F 204 (S23). The communication driver temporarily buffers the acceleration data in the CAN I/F 204 and outputs the acceleration data to the sensor layer 201 (S24) . The sensor layer 201 outputs the acceleration data to the application layer as a higher-order layer (S25) and writes the acceleration data to database DB_C to update database DB_C (S26) .

FIG. 7 illustrates an example where an interrupt process performed as an event writes radar data from the radar sensor 41 to database DB_C.

According to the example in FIG. 7, the communication driver provided for the LAN I/F 203 outputs an interrupt notification to the sensor layer 201 (S32) at the timing when the radar sensor 41 outputs the radar data (S31). At S32, the communication driver temporarily buffers the radar data in the LAN I/F 203 and outputs the radar data along with the interrupt notification to the sensor layer 201. The sensor layer 201 outputs the interrupt notification and the radar data to the application layer as a higher-order layer (S33) and writes the radar data to database DB_C to update database DB_C (S34) .

The sensor layer 201 absorbs a difference, if any, in communication protocol types or sensor types. The application layer can therefore process sensor data without regard for differences in communication protocol types or sensor types.

### Database structure

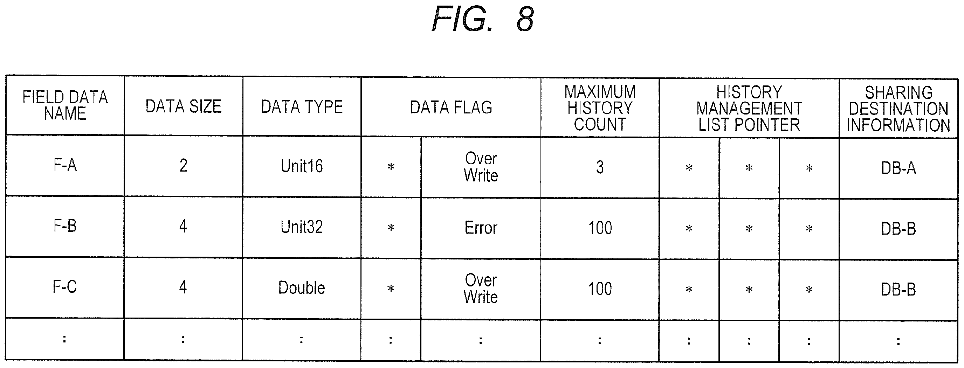

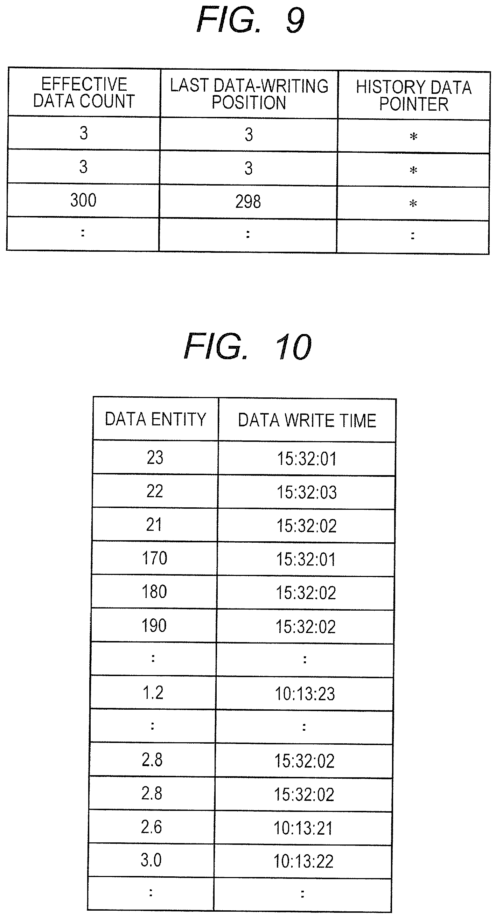

With reference to FIGS. 8 through 10, the description below explains the structure of databases DB_A, DB_B, and DB_C in the onboard system 1 according to the present embodiment. FIGS. 8 through 10 illustrate the structure of database DB_C included in the onboard microcontroller 20. Databases DB_A and DB_B included in the onboard-system SoCs 10A and 10B have the same structure as database DB_C. Database DB_C includes a field list, a history management list, and a history data list. FIG. 8 illustrates the field list. FIG. 9 illustrates the history management list. FIG. 10 illustrates the history data list.

With reference to FIG. 8, the field list will be described. As illustrated in FIG. 8, the field list registers "field data name, " "data size," "data type," "data flag," "maximum history count," "history management list pointer," and "sharing destination information" for each field.
"Field data name" represents the name to identify the corresponding field.
"Data size" represents the size of one piece of data for the corresponding field.
"Data type" represents the type of data for the corresponding field.
"Data flag" is comprised of eight bits in all. The first bit is configured as a flag indicating whether data can be written to the corresponding field. The second bit is configured as a flag indicating the behavior applicable when data for the corresponding field exceeds "maximum history count" to be described later. "OverWrite" signifies overwriting data. "Error" signifies returning error without writing data. The third to eighth bits are reserved.
"Maximum history count" represents the upper limit for a count of data that can be registered in the corresponding field. Multiplying "data size" by "maximum history count" therefore ensures an area to register data for the corresponding field in the history data list to be described later.
"History management list pointer" provides an address to refer to the information about the corresponding field in the history management list to be described later.
"Sharing destination information" represents the name to identify a database as a destination to share data for the corresponding field. The example in FIG. 8 signifies that data for field F-A is shared by database DB_A included in the onboard-system SoC 10A and data for fields F-B and F-C is shared by database DB_B included in the onboard-system SoC 10B.

With reference to FIG. 9, the history management list will be described. As illustrated in FIG. 9, the history management list registers "effective data count," "last data-writing position," and "history data pointer" for each field.
"Effective data count" represents the number of pieces of data available in data for the corresponding field.
"Last data-writing position" represents the position (such as address) of most recently registered data in data for the corresponding field.
"History data pointer" represents the beginning address in the history data list to be described later that registers data for the corresponding field.

With reference to FIG. 10, the history data list will be described. As illustrated in FIG. 10, the history data list registers "data entity" and "data write time."
"Data entity" represents actual data.
"Data write time" represents the time when actual data was registered. A time stamp value is provided here.

The description below explains in more detail the contents of the field list, the history management list, and the history data list illustrated in FIGS. 8 through 10 by using specific examples.

In FIG. 8, "maximum history count" includes field F-A set to "3," field F-B set to "100," and field F-C set to "300." In FIG. 10, three pieces of data from the topmost one are defined as an area to register data for field F-A. The next 100 pieces of data are defined as an area to register data for field F-B. The next 300 pieces of data are defined as an area to register data for field F-C. Accordingly, three pieces of data from the topmost one correspond to data for field F-A. The subsequent 100 pieces of data correspond to data for field F-B. The subsequent 300 pieces of data correspond to data for field F-C.

In FIG. 8, field F-A includes "data size" set to "2" and "maximum history count" set to "3." Multiplying 2(data size) by 3 (maximum history count) therefore ensures an area to register data for field F-A.

In FIG. 8, field F-A includes "data flag" whose second bit is set to "OverWrite." The fourth and subsequent data in field F-A are therefore overwritten to discard the earliest data.

In FIG. 9, field F-A includes "effective data count" set to "3." FIG. 10 therefore shows that three pieces of data from the topmost one for field F-A are all available.

In FIG. 10, data "22" for field F-A is most recently stored. In FIG. 9, "last data-writing position" for field F-A therefore represents the position of data "22."

In FIG. 10, data for field F-A corresponds to three pieces of data from the topmost one. In FIG. 9, "history data pointer" for field F-A represents the address where the beginning data "23" is registered.

### Database sharing

The description below explains a method of sharing databases DB_A, DB_B, and DB_C in the onboard system 1 according to the present embodiment.

According to the examples in FIGS. 8 through 10, database DB_A included in the onboard-system SoC 10A is registered as a sharing destination to share data for field F-A in database DB_C provided for the onboard microcontroller 20.

When data for field F-A in the history data list of database DB_C is updated, the communicator 200 of the onboard microcontroller 20 refers to the field list of database DB_C and confirms that the sharing destination of data in field F-A is database DB_A. The communicator 200 transmits a sharing request notifying field F-A to the onboard-system SoC 10A including database DB_A and then transmits all the updated data for field F-A. According to the example in FIG. 10, the communicator 200 transmits the whole of "data entity" and "data write time" corresponding to three pieces of data from topmost one for field F-A in the history data list, for example.

The communicator 100A provided for the onboard-system SoC 10A receives the sharing request followed by the updated data for field F-A from the onboard microcontroller 20, then refers to the field list of database DB_A, and confirms an area to register data for field F-A in the history data list. The communicator 100A registers the updated data for field F-A in the area used to register data for field F-A in the history data list and updates the information about field F-A in the history management list.

Database DB_C and database DB_A can therefore share data for field F-A.

The communicators 100A, 100B, and 200 provided for the onboard-system SoCs 10A and 10B and the onboard microcontroller 20 may transmit a sharing request even though no data is updated. For example, a sharing request may be transmitted in response to a request from the application layer provided for the CPU 112A, 112B, or 211.

The sharing request is transmitted to not only the database having the field list and the history management list registering a field to be shared, namely, the database already sharing data for the field, but may be also transmitted to a database that newly shares data for the field. In this case, the communicator 100A, 100B, or 200 first transmits the information about the field to be shared in the field list, settles the field to be shared, and then transmits a sharing request. When a field to be shared needs to be settled, it may be advantageous to transmit the information about the field to be shared in the history management list. The field data can be thereby shared with a new database.

According to the examples in FIGS. 8 through 10, data in databases DB_A, DB_B, and DB_C are shared in units of fields. However, data in the database can be shared also in units of databases.

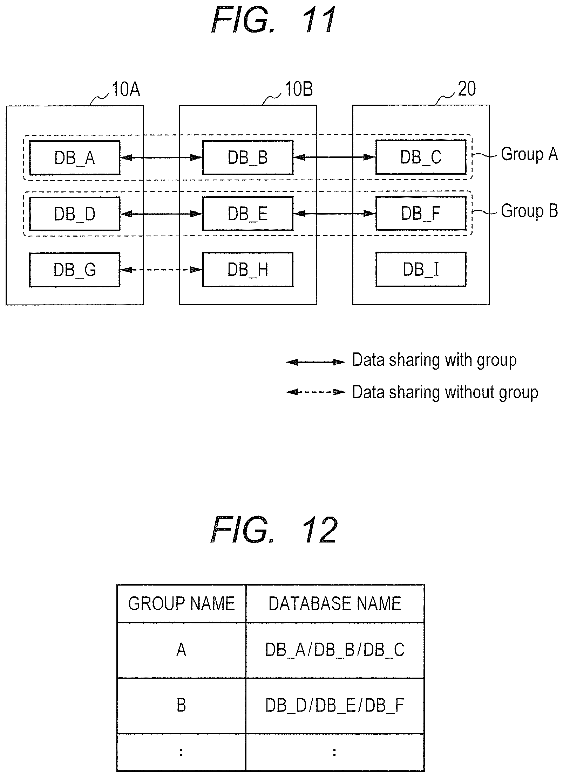

With reference to FIGS. 11 and 12, the description below explains a method of sharing data in the database in units of databases.

As illustrated in FIG. 11, the onboard-system SoC 10A includes databases DB_D and DB_G in addition to database DB_A. The onboard-system SoC 10B includes databases DB_E and DB_H in addition to database DB_B. The onboard microcontroller 20 includes databases DB_F and DB_I in addition to database DB_C.

Databases DB_A, DB_B, and DB_C are grouped into group A. Data in databases DB_A, DB_B, and DB_C are shared in units of databases. Databases DB_D, DB_E, and DB_F are grouped into group B. Data in databases DB_D, DB_E, and DB_F are shared in units of databases.

In this case, as illustrated in FIG. 12, the onboard-system SoCs 10A and 10B and the onboard microcontroller 20 each maintain group information that registers a group name of the corresponding group and a database name of the database into which the corresponding databases are grouped. In detail, the database layer maintains the group information.

When data in database DB_C is shared, for example, the communicator 200 provided for the onboard microcontroller 20 refers to the group information and confirms databases DB_A and DB_B grouped into group A where database DB_C is also grouped. The communicator 200 transmits a sharing request notifying database DB_C to the onboard-system SoCs 10A and 10B including databases DB_A and DB_B, respectively, and then transmits all data in database DB_C.

The communicator 100A provided for the onboard-system SoC 10A receives the sharing request followed by all data in database DB_C from the onboard microcontroller 20, refers to the group information, and confirms database DB_A grouped into group A where database DB_C is also grouped. The communicator 100A registers all data of database DB_C in database DB_A. Similarly, the onboard-system SoC 10B also registers all data of database DB_C in database DB_B.

It is therefore possible to share data in databases DB_A, DB_B, and DB_C grouped into group A. The timing to share data in databases DB_A, DB_B, and DB_C corresponds to the timing to update the database similarly to the field-based sharing, for example. However, the timing is not limited thereto.

According to the example in FIG. 12, data in databases DB_G, DB_H are shared in units of fields. The field-based sharing method is comparable to the method illustrated in FIGS. 8 through 10. Namely, databases DB_G and DB_H just need to register the correlated database as the sharing destination information about a field to be shared in the field list.

The method illustrated in FIGS. 8 through 10 is also applicable to the method of sharing data in the database in units of databases. Namely, the sharing destination information about all fields in the field list of a given database registers information about all databases grouped into the same group as that database. This also makes it possible to share data in units of databases. However, this method consumes a lot of time to share data because the data sharing needs to determine the field for the corresponding data and refer to the sharing destination information for the field.

Instead, the above-mentioned method using the group information need not determine the field for data and can therefore shorten the time to share the data.

### Time synchronization

The onboard system 1 according to the present embodiment assumes that the automatic operation is performed while the onboard-system SoCs 10A and 10B and the onboard microcontroller 20 perform processes in cooperation with each other by using data registered in the database. Therefore, the time needs to be synchronized among the onboard-system SoCs 10A and 10B and the onboard microcontroller 20.

The present embodiment assumes that one of the onboard-system SoCs 10A and 10B and the onboard microcontroller 20 acts as a control entity to perform a time synchronization process with other apparatuses.

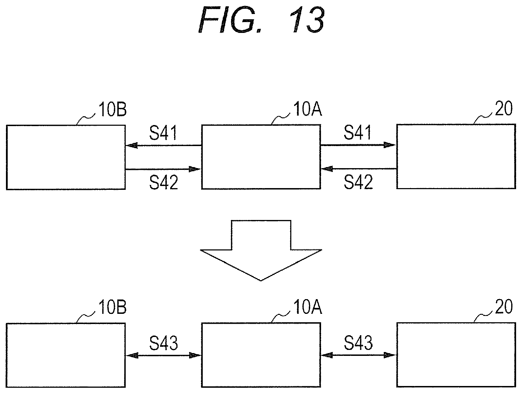

With reference to FIG. 13, the description below explains a method of performing the time synchronization in the onboard system 1 according to the present embodiment. FIG. 13 illustrates the method using the onboard-system SoC 10A acting as a control entity. The same applies to the method using the onboard-system SoC 10B or the onboard microcontroller 20 acting as a control entity.

As illustrated in FIG. 13, the communicator 100A provided for the onboard-system SoC 10A acts as a control entity and issues a notification of performing the time synchronization process to the onboard-system SoC 10B and the onboard microcontroller 20 (S41) . The notification may be performed through a unicast or a broadcast.

The communicator 100A provided for the onboard-system SoC 10A later receives a response to the notification at S41 from the onboard-system SoC 10B and the onboard microcontroller 20 (S42) and is settled as a control entity.

The communicator 100A provided for the onboard-system SoC 10A then performs the time synchronization process in relation to the onboard-system SoC 10B and the onboard microcontroller 20 at a predetermined synchronization interval (S43). This makes it possible to synchronize the time among the onboard-system SoCs 10A and 10B and the onboard microcontroller 20. The method of the time synchronization process is not limited thereto and may perform a known time synchronization process.

### Specific configuration of the onboard system

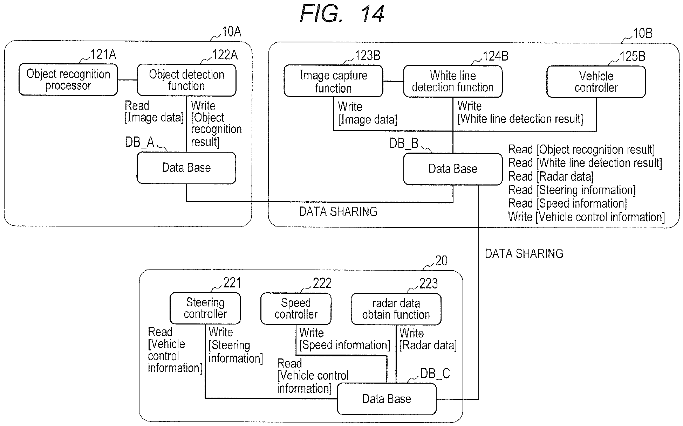

As above, the onboard system 1 according to the present embodiment is capable of database sharing and the time synchronization and can therefore embody various functions. With reference to FIG. 14, the description below explains a specific configuration of the onboard system that can be embodied by the onboard system 1 according to the present embodiment.

As illustrated in FIG. 14, the onboard-system SoC 10A includes an object recognition processor 121A and an object detection function portion 122A in addition to database DB_A. The image processor 108A embodies the object recognition processor 121A and the object detection function portion 122A.

The onboard-system SoC 10B includes an image capture function portion 123B, a white line detection function portion 124B, and a vehicle controller 125B in addition to database DB_B. The image processor 108B embodies the image capture function portion 123B and the white line detection function portion 124B. The CPU 112B embodies the vehicle controller 125B.

The onboard microcontroller 20 includes a steering controller 221, a speed controller 222, and a radar data obtain function portion 223 in addition to database DB_C. The CPU 211 and the timer 208 embody the steering controller 221 and the speed controller 222. The DSP 206 embodies the radar data obtain function portion 223.

The description below explains functions of the constituent elements illustrated in FIG. 14. Databases DB_A, DB_B, and DB_C are assumed to share data in units of databases.

The image capture function portion 123B captures camera images acquired by the four sensor cameras 31B and writes the captured image data to database DB_B.

The white line detection function portion 124B detects a while line on the road based on the image data captured by the image capture function portion 123B and writes a white line detection result to database DB_B.

The object detection function portion 122A reads image data captured by the image capture function portion 123B from database DB_A, recognizes objects (such as humans, other vehicles, and obstacles) around the vehicle based on the read image data in cooperation with the object recognition processor 121A, and writes an object recognition result to database DB_A.

The radar data obtain function portion 223 acquires radar data from the two radar sensors 41 and writes the acquired radar data to database DB_C.

The steering controller 221 reads vehicle control information (to be described later) from database DB_C, controls the vehicle steering based on the read vehicle control information, and writes steering information representing the current steering state to database DB_C.

The speed controller 222 reads the vehicle control information (to be described later) from database DB_C, controls the vehicle speed based on the read vehicle control information, and writes speed information representing the current speed to database DB_C.

The vehicle controller 125B reads object information (object recognition result), white line information (white line detection result), sensor information (radar data), and vehicle information (steering information and speed information) from database DB_B. The vehicle controller 125B generates the vehicle control information to control the vehicle steering and speeds based on the read information and writes the generated vehicle control information to database DB_B.

While there have been described the specific embodiments of the invention made by the inventors, it is to be distinctly understood that the present invention is not limited to the above-mentioned embodiments and may be embodied in various modifications without departing from the spirit and scope of the invention.

In the above-mentioned embodiment, for example, the onboard-system SoC and the onboard microcontroller maintain information about a communication path to transmit data in the database. When the communication path is unflawed and is usable, the communication path may be used to transmit data in the database. The onboard-system SoC and the onboard microcontroller can maintain information about an alternative path. When the communication path is flawed and is unusable, the onboard-system SoC and the onboard microcontroller can use the alternative path to transmit data in the database. The communication path may use SPI and the alternative path may use LAN, for example.

According to the above-mentioned embodiment, the components performing various processes in the onboard-system SoC and the onboard microcontroller can be configured as software such as the CPU, the memory, and other circuits as above and can be embodied as software such as a program loaded into the memory. It is therefore understood by those skilled in the art that the components can be embodied as hardware only, software only, or a combination of these, and are not limited thereto.

The above-mentioned program is stored by using various types of non-transitory computer readable medium and can be supplied to computers. The non-transitory computer readable medium includes various types of tangible storage medium. Examples of the non-transitory computer readable medium include a magnetic recording medium (such as flexible disk, magnetic tape, and hard disk drive), a magnet-optical recording medium (such as magnet-optical disk), CD-ROM (Compact Disc-Read Only Memory), CD-R (CD-Recordable), CD-R/W (CD-ReWritable), and semiconductor memory (such as mask ROM, PROM (Programmable ROM), EPROM (Erasable PROM), flash ROM, and RAM (Random Access Memory)). The program may be supplied to computers by using various types of transitory computer readable medium. Examples of the transitory computer readable medium include electric signals, optical signals, and electromagnetic waves. The transitory computer readable medium can supply the program to computers by using wired communication paths such as an electric cable and optical fiber or wireless communication paths.

## Claims

1. An onboard system comprising:
a plurality of electronic apparatuses each having a database,
wherein the database registers, for each field, information about a database as sharing destination to share data for the field; and
wherein, when sharing data for a field registered in a database of the electronic apparatus, the electronic apparatus transmits data for the field to an electronic apparatus including a database as sharing destination that shares data for the field.

2. The onboard system according to claim 1,
wherein, when data for a field registered in a database of the electronic apparatus is updated, the electronic apparatus transmits data for the field to an electronic apparatus including a database as sharing destination that shares data for the field.

3. The onboard system according to claim 1,
wherein, when receiving a request to share data for a field registered in a database of the electronic apparatus, the electronic apparatus transmits data for the field to an electronic apparatus including a database as sharing destination that shares data for the field.

4. The onboard system according to claim 1,
wherein the database maintains:
a history data list that registers data; and
a field list that registers, for each field, an area to register data for the field in the history data list and information about a database as sharing destination to share data for the field.

5. The onboard system according to claim 1,
wherein, when sharing data for a field registered in a database of the electronic apparatus with a database not registering the field, the electronic apparatus transmits information about the field in the field list to an electronic apparatus including the database, allows the field to be registered, and then transmits data for the field.

6. The onboard system according to claim 1,
wherein the electronic apparatus maintains group information about a group to group the database and,
when sharing data registered to a database of the electronic apparatus, the electronic apparatus transmits data in a database of the electronic apparatus to an electronic apparatus including a database grouped to the same group as that of the database of the electronic apparatus.

7. The onboard system according to claim 6,
wherein, when data registered to a database of the electronic apparatus is updated, the electronic apparatus transmits data in the database of the electronic apparatus to an electronic apparatus including a database grouped to the same group as that of the database of the electronic apparatus.

8. The onboard system according to claim 1,
wherein the electronic apparatus issues a notification of performing time synchronization to another electronic apparatus, receives a response to the notification from the other electronic apparatus, and subsequently performs a time synchronization process in relation to the other electronic apparatus.

9. The onboard system according to claim 1,
wherein data registered in the database includes at least one of sensor information, object information, white line information, vehicle information, and vehicle control information.

10. The onboard system according to claim 1,
wherein the electronic apparatus
maintains information about a communication path and an alternative path to transmit data in the database,
transmits data in the database by using the communication path, if usable, and
transmits data in the database by using the alternative path if the communication path is unusable.

11. A control method of an onboard system including a plurality of electronic apparatuses each of which has a database,
wherein the database registers, for each field, information about a database as sharing destination to share data for the field; and
wherein, when sharing data for a field registered in a database of the electronic apparatus, the electronic apparatus transmits data for the field to an electronic apparatus including a database as sharing destination that shares data for the field.
